# EUROPEAN PATENT SPECIFICATION

(11) **EP 0 682 186 B1**
(45) Date of publication and mention of the grant of the patent: **10.10.2001**
(21) Application number: 94931200.3
(22) Date of filing: 01.11.1994
(51) Int. Cl.: F16B 19/10, F16B 5/06

(54) **MEMBER MOUNTING CLIP**
BEFESTIGUNGSKLAMMER
ATTACHE DE FIXATION D'ELEMENTS

(30) Priority: 02.11.1993 JP 5905493 U
(43) Date of publication of application: 15.11.1995
(73) Proprietor: NIPPON POP RIVETS AND FASTENERS LTD., Tokyo 102 (JP)
(72) Inventor: KANIE, Hideki, Toyohashi-shi, Aichi-ken 440 (JP)
(74) Representative: Dlugosz, Anthony Charles
(86) International application number: JP9401843
(87) International publication number: WO9512762

(56) References cited:
- EP-A- 0 450 820
- JP-U- 63 112 607
- JP-Y- 4 017 859
- JP-Y- 56 034 171
- US-A- 2 877 682
- US-A- 4 114 509
- US-A- 5 370 484
- Microfilm of Japanese Utility Model Application No. 200258/1984 (Laid-Open No. 112108/1986), (Toyota Motor Corp.), July 16, 1986 (16.07.86), lines 16 to 20, page 9, Figs. 7, 8 (Family: none).
- Microfilm of Japanese Utility Model Application No. 5779/1989 (Laid-Open No. 96010/1990), (Kato Hatsujo K.K.), July 31, 1990 (31.07.90), lines 9 to 19, page 9 (Family: none).

## Description

The present invention relates to a component fastening clip comprising a pin and a bush to connect attachment components such as two panels to each other.

There is a well known clip comprising a pin and a bush which connects by inserting a shank of the bush into the holes of attachment components such as two panels. A shank of the pin is then inserted into the hollowed shank of the bush diametrically to enlarge a portion of the bush shank so that the attachment components are connected to each other by means of the enlarged shank portion of the bush and a flange of the bush. This clip facilitates the mounting operation because the attachment components can be connected to each other only by inserting the bush shank into holes of the attachment components and then the pin into the bush shank. The case where a conventional clip is to be applied to panels as attachment components having a wide range of different thicknesses should be considered. If several attachment components as a combination are thick, the components can be connected to each other by the enlarged diameter portion of the bush shank and the bush flange. However, if the combination of attachment components is thin, then they cannot satisfactorily be connected to each other because the root portion of the bush is only slightly enlarged so that one panel remains unattracted to the other. If the length of the bush is increased to handle thick panels, the length from the bottom surface of a panel to the end of the bush becomes too long for thin panels and the rigidity of the shank cannot be kept at a high level to reduce the resistance of the clip to pulling force. Therefore, to take care of the wide range of the panel thicknesses, a large number of clips are necessary to meet different panel thicknesses.

It is an object of the present invention to provide a component fastening clip having a sufficiently high coupling force for both thick panels and thin panels over a wide range of panel thicknesses, and also a high resistant force against pulling force.

It is a further object of the present invention is to provide a clip which is easily removable after the clip is mounted on the components and is also reusable.

The present invention provides a clip comprising a pin including a flange and a shank and a bush including a flange and a shank, the bush being hollowed for receiving the pin shank therein, wherein the bush shank comprises a root portion adjacent to the flange, a mid portion located adjacent to the root portion and remote from the flange and an end portion, located at the end of mid-portion remote from the root portion wherein the thickness of the root portion is less than the thickness of the mid-portion and the pin is movable relative to the bush between a first non-enlarged diameter coupled position in which engagement means on the bush engage with co-operating secondary engagement means on the pin and a second, diameter enlargement coupled position, i.e. a clip as described in European Patent No 0 450 820, characterised in that the pin can be placed in said second, diameter enlargement coupled position in which engagement means on the bush engage with co-operating primary engagement means on the pin to enlarge the diameter of the bush shank at its end remote from the flange.

Thus, the bush shank can be bent from the root portion thereof to be enlarged diametrically, so that a high coupling force is maintained even for thin panels, to prevent one panel from detaching from the other panel. Owing to its high resistance against pulling force, there is no need to lengthen the shank.

The clip of the present invention produces a satisfactory result when the length of the thin portion from the root to the mid portion of the bush shank is substantially 30% of a maximum thickness of the panels. The clip of the present invention can be so constructed that the clip is positioned between a non-enlarged diameter coupled position in which the pin shank is inserted in the bush shank but does not enlarge the diameter of the bush shank while the pin flange is spaced apart from the bush flange, and a diameter enlargement coupled position where the pin shank is further inserted into the bush shank so as to enlarge an end portion of the bush shank by means of an end portion of the pin shank while the pin flange is in surface-contact with the bush flange, and that the end portion of the bush shank is formed with radially inwardly projecting protrusions. Thus, a higher resistance to pulling force is obtained.

In an alternative embodiment of the clip according to the present invention, the clip can be formed so that a diametrically crossing engagement bar is formed on the end of the hollow shank of the bush; the pin shank is composed of two legs apart from each other toward the end thereof; the end portion of each leg is formed with a recessed portion to receive the engagement bar to form a first engagement pawl to engage with the engagement bar so that the clip can be positioned at a non-enlarged diameter coupled position in which the pin shank is inserted in the bush shank but does not enlarge the bush shank diametrically; the mid portion of each leg has, on the inner side thereof, a second engagement pawl engaging with the engagement bar to hold the legs apart from one another so that the clip can be positioned at a diameter enlargement coupled position in which the pin shank is further inserted in the bush shank to enlarge the diameter of the end portion of the bush shank; and the inner side of each leg has a third engagement pawl which is formed with a recessed portion to receive the engagement bar so that the clip can be positioned at a third position in which the pin is inserted still further in the bush shank to return the bush shank to the non-enlarged diameter coupled position. Thus, removal of the clip can be further facilitated.

Preferred embodiments of a clip will now be described with reference to the accompanying drawings, in which

Figure 1 is a half-sectional front view of a first embodiment of a clip of the present invention which is at a clip disengagement prevention coupled position.

Figure 2 is a sectional front view of the clip of Figure 1 which is at a nonenlarged diameter coupled position.

Figure 3 is a front view of a pin of the clip.

Figure 4 is a half-sectional front view of a bush of the clip.

Figure 5 is a partially broken side view of the bush of Figure 4.

Figure 6 is a sectional front view of a condition that the clip of Figure 1 is at a diameter-enlargement coupled position to connect a thick panel to another panel.

Figure 7 is a sectional front view of a condition that the clip of Figure 1 is at the diameter-enlargement coupled position to connect a thin panel to the other panel.

Figure 8 is a plan view of a second embodiment of a clip of the present invention.

Figure 9 is a sectional front view showing a removal operation of the clip of Figure 8;

Figure 10 is a sectional front view of a third embodiment of a clip of the present invention which is at a non-enlarged diameter coupled position.

Figure 11 is a sectional front view of the clip of Figure 10 which is at a diameter enlargement coupled position.

Figure 12 is a sectional front view of the clip of Figure 10 in a third position that is to be returned to the non-enlarged diameter coupled position.

Figure 13 is a front view of a pin of the clip of Figure 10.

Figure 14 is a plan view of a bush of the clip of Figure 10.

Figure 15 is a front view of the bush of Figure 14.

Figure 16 is a sectional view taken along line A-A of Figure 15.

Figure 17 is a sectional view taken along line B-B of Figure 14.

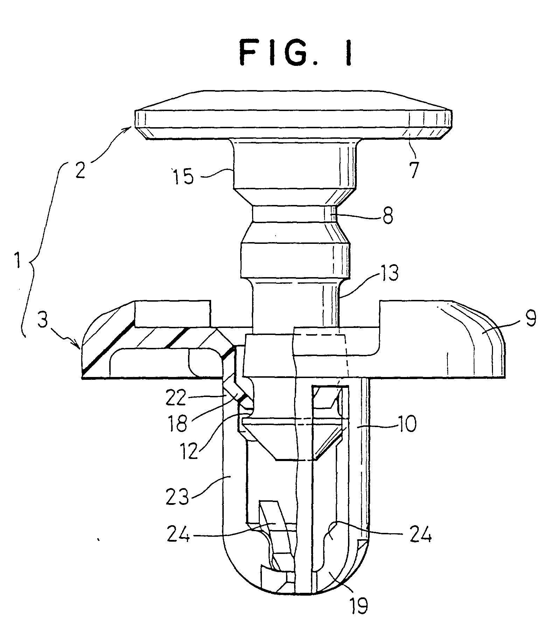

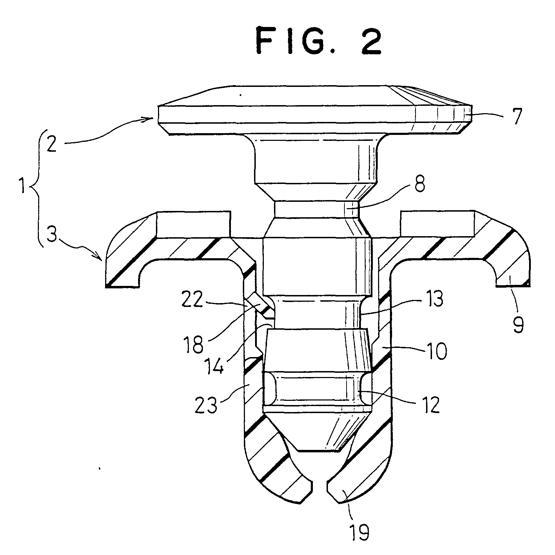

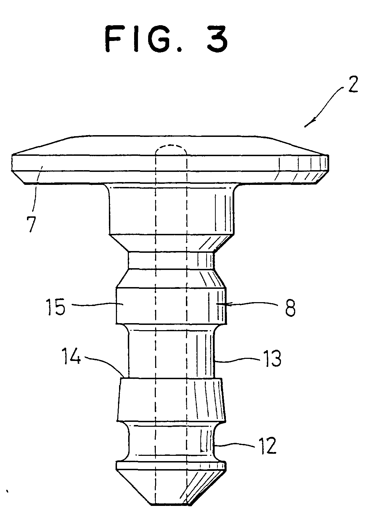

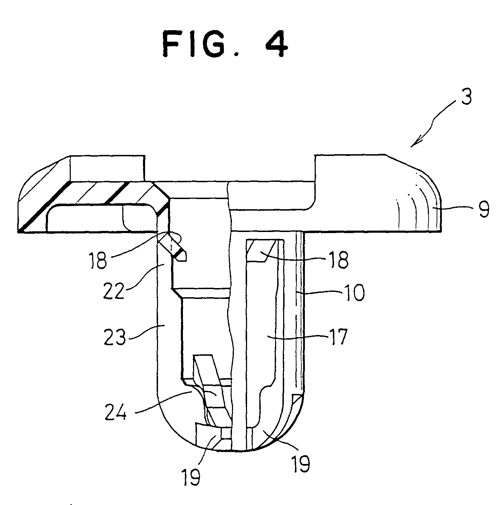

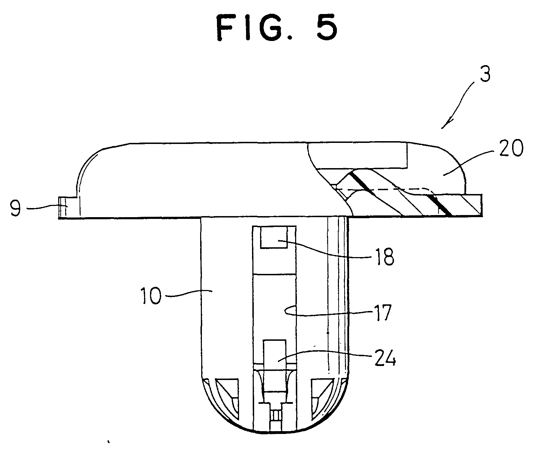

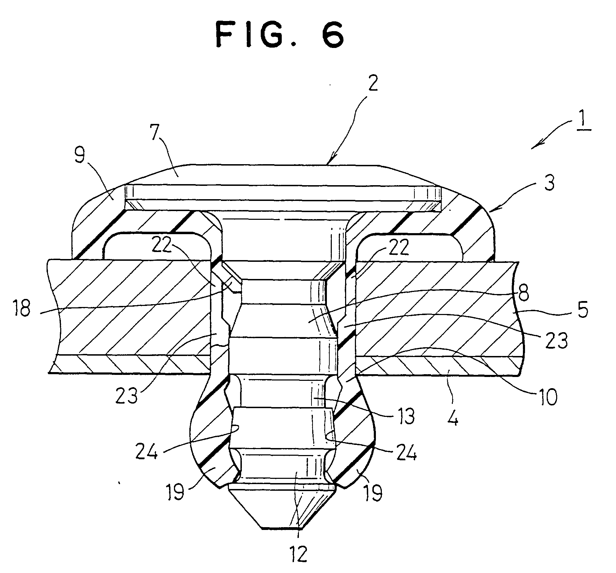

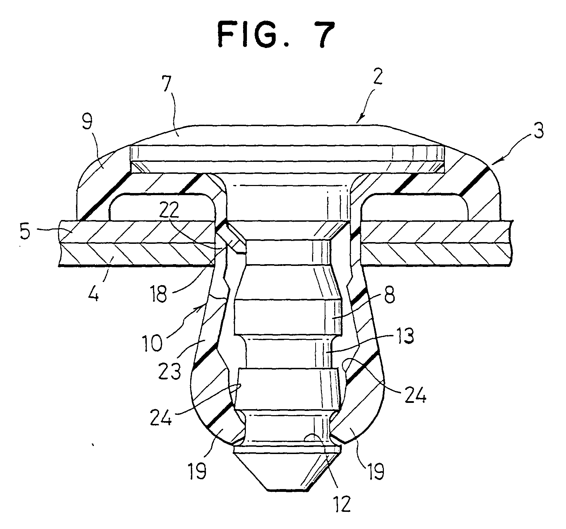

The present invention is described further by way of embodiments, with reference to accompanying drawings. Figures 1 through 7 show a first embodiment of a clip 1 of the present invention. The clip 1 comprises a pin 2 and a bush 3, both of which are made of plastic material, respectively. As shown in Figures 6 and 7, the clip 1 connects two panels 4 and 5 as attachment components to each other. A shank of the bush is inserted into holes of the panels to be connected and the pin is forced into the bush shank to enlarge the diameter of the bush shank, so that the panels 4 and 5 are connected to each other by means of the enlarged diameter portion and a flange of the bush. For example, the panel 4 is a vehicle body and the panel 5 is a panel to be mounted on the vehicle. In the preferred embodiment, the clip 1 can be positioned at one among positions including a clip disengagement prevention coupled position as shown in Figure 1 in which the pin 2 and the bush 3 are coupled to prevent them from disengaging from each other, a non-enlarged diameter coupled position as shown in Figure 2 in which the pin 2 is slightly forced into the bush 3 to be ready for clip insertion into panel holes, and a diameter enlargement coupled position as shown in Figures 6 and 7 in which the clip connects the panels 4 and 5 to each other. The non-enlarged diameter coupled position of Figure 2 is also a released position returned from the diameter enlargement coupled position as shown in Figures 6 and 7. In Figure 6, the panel 5 is thick while in Figure 7, the panel 5 is thin. As shown in Figure 3, the pin 2 has a flange 7 and a shank 8 hanging down from the flange. As indicated by broken lines in Figure 3, the pin shank 8 is hollowed to save the material and to reduce the weight. The bush 3 comprises a flange 9 and a shank 10 hanging down from the flange as shown in Figure 4 and 5. The bush is hollowed to receive the pin shank 8.

In order to selectively position the clip 1 at one of the three coupled positions including the clip disengagement prevention coupled position of Figure 1, the non-enlarged diameter coupled position of Figure 2 and the diameter enlargement coupled position of Figure 6, the shank 8 of the pin 2 is formed with a first engagement groove 12 at its end portion and a second engagement groove 13 which is formed adjacent to the first engagement groove 12 as shown in Figure 3. On the lower side below the first engagement groove 12, the shank diameter is reduced for easy insertion into the bush shank. On the upper side of the first engagement groove, the shank diameter is tapered upwardly. The upper side of the second engagement groove 13 is tapered. The lower side of the second engagement groove, however, is provided with a step portion 14 which is cut horizontally so that first engagement pawls (described later) of the bush shank 10 are brought into engagement with the step portion 14 to firmly restrict the bush from downward movement. Above the engagement groove 13, a large diameter portion 15 is formed.

As shown in Figures 4 and 5, the shank 10 of the bush 3 is divided by a plurality (three in the embodiment) of slits 17 to be enlarged diametrically when the pin shank 8 is inserted. On the inner side of the bush shank 10, first engagement pawls 18 are formed at a position that is close to the flange 9 but is not affected by enlargement of the diameter of the bush shank 10. Second engagement pawls 19 are formed at the end of the shank. The second engagement pawls 19 are formed between the slits 17. On the top surface of the bush flange 9, as shown in Figure 5, a groove-recessed portion 20 is formed to define a space into which an end of a tool such as a screw-driver can be inserted. The pin flange 7 has a smaller diameter than the bush flange to establish or maintain the space of the recessed portion 20, so that the pin 2 can be drawn up from the bush 3 easily.

The first and the second engagement grooves 12 and 13 of the pin shank 8 and the first and second engagement pawls 18 and 19 of the bush shank 10 enable the pin 2 and the bush 3 to be selectively positioned at the aforementioned three positions. At the clip disengagement prevention coupled position of Figure 1, the first engagement pawls 18 of the bush shank 10 are in engagement with the first engagement groove 12 of the pin shank 8. At the non-enlarged diameter coupled position of Fig. 2, the first engagement pawls 18 of the bush shank are in engagement with the second engagement groove 13. At the diameter enlargement coupled position of Figure 6 and 7, the second engagement pawls 19 of the bush shank engage with the first engagement groove 12 of the pin shank to enlarge the diameter of the bush shank 10. When the pin 2 is attempted to be drawn out of the bush 3 at the non-enlarged diameter coupled position of Figure 2, the step portion 14 of the second engagement groove 13 of the pin shank 8 functions to confine the first engagement pawls 18 in the second engagement groove 13 so that the bush is surely drawn out of the panels 4 and 5 together with the pin. Even if the clip is left at the diameter enlargement coupled position of Figure 6 and 7 for a long period of time to deform the bush shank into a diametrically enlarged shape, the first engagement pawls 18 are not affected by the diameter enlargement of the bush shank 10 because of the positions of the pawls. Therefore, the first engagement pawls 18 are kept in their original posture, so that the pawls always remain in engagement with the second engagement groove 13 to allow the pin and the bush to be drawn out together without fail.

In the bush shank 10, a root portion 22 adjacent the flange 9 extends to a mid portion 23 with such a thickness that the root portion 22 is thinner than the mid portion 23. When the thick panel 5 of Figure 6 is connected to the panel 4, the end of the bush shank is enlarged diametrically at the diameter enlargement coupled position, so that the two panels are connected firmly. Even when the thin panel 5 of Figure 7 is connected to the panel 4, the bush shank 10 is also bent at the thin root portion 22 to be enlarged diametrically at the diameter enlargement coupled position, so that its coupling force is maintained at a high level even for the thinner panel 5. Since the diameter of the bush shank 10 can be enlarged at the root portion 22 as well as at its end portion, the range of thicknesses of panels as attachment components becomes wide without requiring an increase in the length of the bush shank. The high resistance of the bush against pulling force can also be maintained. A preferable result has been obtained by making the length of the thin portion 22 from the root to the mid portion 23 substantially 30% of a maximum thickness of the panels 4 and 5 (Figure 6).

In this first embodiment, the end of the bush shank 10 is provided with axially extending ribs 24 projecting radially inwardly. At the diameter enlargement coupled position of Figure 6 and 7, the ribs 24 come in contact with the pin shank 8 to prevent the bush shank from bending radially inwardly. This increases the coupling force and makes the resistance of the clip against pulling force further higher.

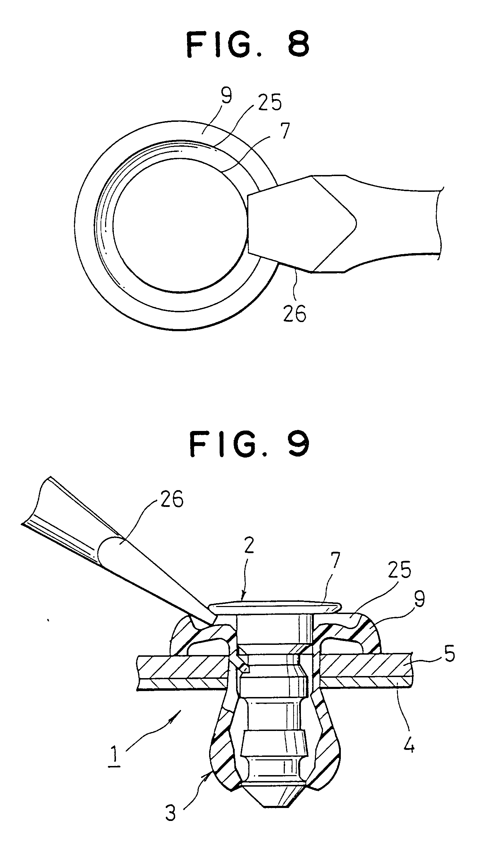

Figures 8 and 9 show a variation of the clip 1 of Figures 1 through 7. This embodiment is formed with a recessed portion 25 which defines a space between the pin flange 7 and the bush flange 9 around the whole of the periphery of the pin flange 7 at the diameter enlargement coupled position. Accordingly, the end 26 of a tool such as a screw-driver can be inserted from any position so that the clip can be returned to the non-enlarged diameter coupled position regardless of the direction of the screw-driver.

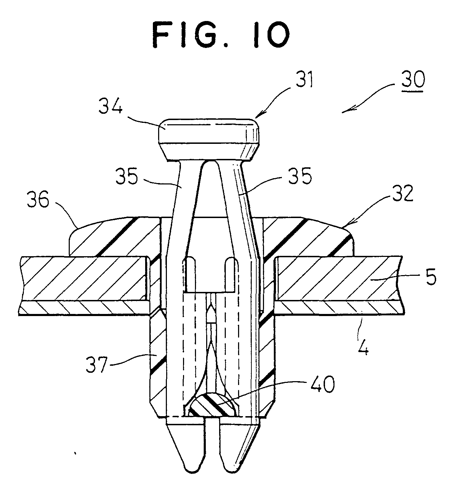

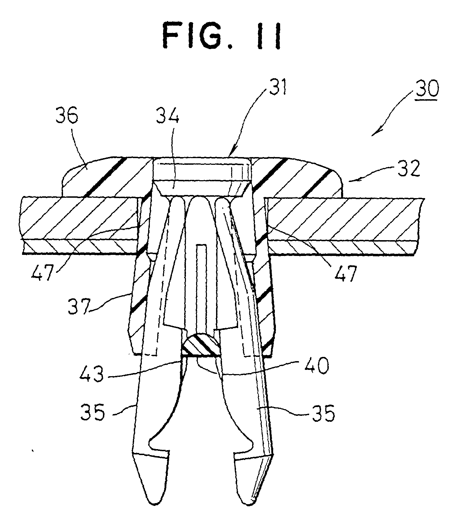

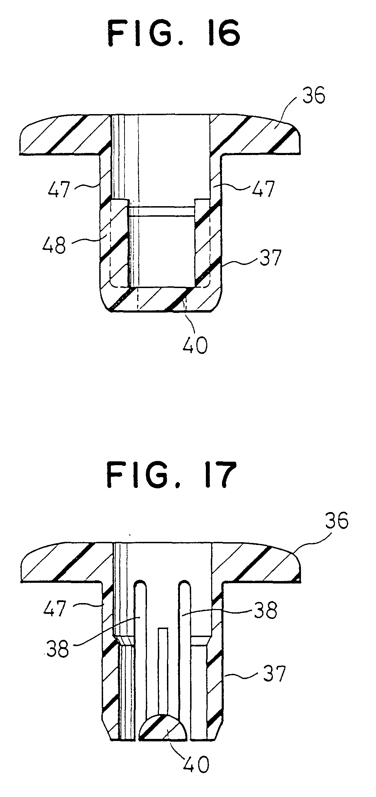

Figures 10 through 17 show a third embodiment of a clip of the present invention. A clip 30 of this embodiment comprises a pin 31 and a bush 32, which are made of plastic material. As shown in Figures 10 and 11, a bush shank of the clip 30 is inserted into the holes of the panels to be connected and the pin is forced into the bush shank to enlarge the diameter of the shank, so that the enlarged diameter portion of the bush shank and the bush flange serve to connect the panels 4 and 5 to each other. Upon further pressing the pin shank, the diameter of the bush shank is again decreased to thereby allow the clip 30 to be pulled out of the panels 4 and 5.

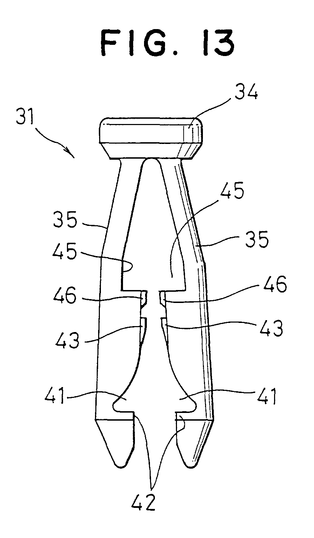

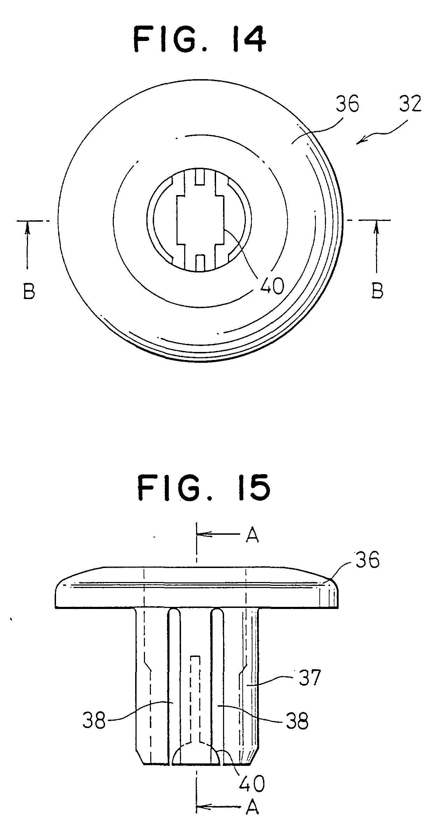

As shown in Figure 13, the pin 31 comprises a flange 34 and two legs 35 which are apart from each other toward the ends. As shown in Figures 14 through 17, the bush 32 has a flange 36 and a shank 37 hanging down from the flange. The bush is hollowed to receive the legs 35 of the shank of the pin. The bush shank 37 is divided by a plurality of slits 38 to be enlarged diametrically when the pin legs 35 are inserted. On the end of the bush shank 37, a diametrically crossing engagement bar 40 is formed.

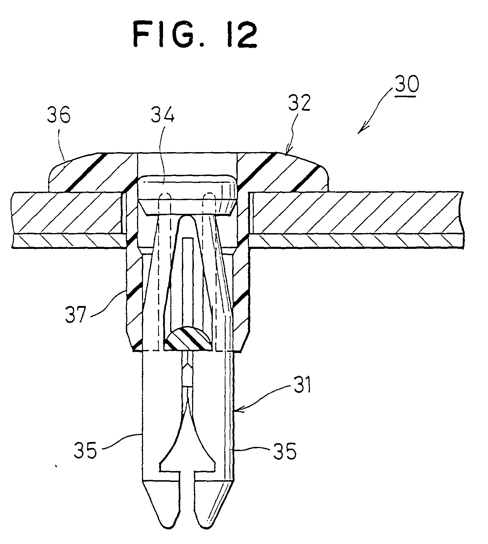

As shown in Figure 10, the end of each leg 35 is formed with a recessed portion 41 to receive the engagement bar 40 to form a first engagement pawl 42 to engage with the engagement bar 40 so that the clip can be positioned at a non-enlarged diameter coupled position in which the legs 35 of the pin shank are inserted in the bush shank 37 but do not enlarge the bush shank diametrically. As shown in Figure 11, the mid portion of each leg 35 has, on the inner side thereof, a second engagement pawl 43 engaging with the engagement bar 40 to hold the legs 35 apart from one another so that the clip can be positioned at a diameter enlargement coupled position in which the pin legs 35 are further inserted in the bush shank 37 to enlarge the diameter of the end of the pin legs 35. As shown in Figure 12, the inner side of each leg has a third engagement pawl 46 which is formed with a recessed portion 45 to receive the engagement bar 40 so that the clip can be positioned at a third position in which the pin 31 is still further inserted in the bush shank 37 to return the bush shank 37 to the non-enlarged diameter coupled position. Since the clip is constructed as described above, the pin 31 is simply inserted into the bush 32, so that the clip 30 can easily be mounted on the panels to connect the panels to each other and also removed from the panels.

In the bush shank 37 of the third embodiment, a root portion 47 adjacent the flange 36 also extends to a mid portion 48 with such a thickness that the root portion 47 is thinner than the mid portion 48. Accordingly, even if the thin panel 5 is connected to the panel 4, the bush shank 37 can also be bent in the thin root portion 47 to enlarge the diameter of the bushshank at the diameter enlargement coupled position so as to maintain high coupling force.

In the bush shank of the clip according to the present invention, a root portion adjacent the flange extends to a mid portion with such a thickness that the root portion is thinner than the mid portion. Thus, the bush shank can be bent in the root portion to enlarge the diameter of the bush shank so that high coupling force is established and maintained even for a thin panel. The clip can also deal with a wide range of panel thicknesses to produce sufficient coupling force regardless of the thicknesses of panels. The clip can prevent the connected panels from rising one from the other, and can maintain high resistance against pulling force.

The clip of the present invention can be so constructed that the clip is positioned between a non-enlarged diameter coupled position in which the pin shank is inserted in the bush shank but does not enlarge the bush shank diametrically and a diameter enlargement coupled position in which the pin shank is further inserted in the bush shank so as to enlarge the diameter of the bush shank so that a higher resistance against pulling force is enhanced. The clip can also be provided with a space between the pin flange and the bush flange around the periphery of the pin flange at the diameter enlargement coupled position, so that the end of a tool such as a screw-driver can be forced into the space to return the clip to the non-enlargement coupled position.

The clip of the present invention can be formed so that a diametrically crossing engagement bar is formed at the end of the hollow shank of the bush, the pin shank is composed of two legs apart from each other toward the end thereof, the end portion of each leg is formed with a first engagement pawl coming into engagement with the engagement bar for a non-enlarged diameter coupled position, the mid portion of each leg has, on the inner side thereof, a second engagement pawl engaging with the engagement bar for a diameter enlargement coupled position in which the bush shank is diametrically enlarged, and the inner side of each leg has a third engagement pawl having a recessed portion to receive the engagement bar for a third position in which the pin is still further inserted in the bush shank to return the bush shank to the non-enlarged diameter coupled position. Thus, removal of the clip can be further facilitated.

## Claims

1. A clip (1,30) comprising a pin (2,31) including a flange (7,34) and a shank (8,35) and a bush (3,32) including a flange (9,36) and a shank (10,37), the bush (3,32) being hollowed for receiving the pin shank (8,35) therein, wherein the bush shank (10,37) comprises a root portion (22) adjacent to the flange (9,36), a mid portion (23) located adjacent to the root portion (22) and remote from the flange (9,36) and an end portion, located at the end of mid-portion (23) remote from the root portion (22) wherein the thickness of the root portion (22) is less than the thickness of the mid-portion (23) and the pin (2,31) is movable relative to the bush (3,32) between a first non-enlarged diameter coupled position in which engagement means (18,40) on the bush (3,32) engage with co-operating secondary engagement means (13,42) on the pin (2,31) and a second, diameter enlargement coupled position **characterised in that** the pin (2,31) can be placed in said second, diameter enlargement coupled position in which engagement means (19,40) on the bush (3,32) engage with co-operating primary engagement means (12,43) on the pin (2,31) to enlarge the diameter of the bush shank (10,37) at its end remote from the flange (9,36).

2. A clip (1) according to claim 1 **characterised in that** the engagement means (18) comprise radially inwardly projecting first engagement pawls (18) formed on the root portion (22), and the end portion is formed with radially inwardly projecting ribs (24) and terminates in the engagement means (19) which engage with the co-operating primary engagement means (12,43)and comprise second engagement pawls (19) and the primary and secondary engagement means (12,13) comprise first and second axially spaced radial engagement grooves (12,13) provided on the pin shank (8).

3. A clip (1) according to claim 1 or claim 2 **characterised in that** there is a space between the pin flange (7) and the bush flange (9) around the periphery of the pin flange (7) at the diameter enlarged coupled position.

4. A clip (1) according to claim 2 or claim 3 **characterised in that** the pin (2) can be located relative to the bush (3) in a further position preventing disengagement of the pin (2) from the bush (3), in which the first engagement pawls (18) engage in the first engagement groove (12) to prevent disengagement of the pin (2) from the bush (3).

5. A clip according to claim 1, **characterised in that** the engagement means on the bush is a diametrically crossing engagement bar (40) formed on the end of the hollow shank (37) of the bush (32); the pin shank comprises two legs (35) spaced apart from each other toward the end of the pin shank remote from the flange (34); the free end portion of each leg (35) is formed with a recessed portion (41) to receive the engagement bar (40) to form the secondary engagement means as a first engagement pawl (42) to engage with the engagement bar (40) so that the clip (30) can be positioned at a non-enlarged diameter coupled position in which the pin shank is inserted in the bush shank (37) but does not enlarge the bush shank (37) diametrically; the mid portion of each leg (35) has, on the inner side thereof, the primary engagement means forming a second engagement pawl (43) which engages with the engagement bar (40) to hold the legs (35) apart from one another so that the clip (30) can be positioned at a diameter enlargement coupled position where the pin shank is further inserted into the bush shank (37) to diametrically enlarge the end portion of the bush shank; and the inner side of each leg (35) has a third engagement pawl (46) which is formed with a recessed portion (45) to receive the engagement bar (40) so that the clip (30) can be positioned at a third position where the pin (30) is still further inserted into the bush shank (37) to return the bush shank (37) to the non-enlarged diameter coupled position.

## Patentansprüche

1. Clip (1, 30) aufweisend einem Stift (2, 31) mit einen Flansch (7, 34), einen Schaft (8, 35) und einer Hülse (3, 32) mit einem Flansch (9, 36) und einem Schaft (10, 37), wobei die Hülse (3, 32) zur Aufnahme des Stiftschaftes (8, 35) darin hohl ausgebildet ist, wobei der Hülsenschaft (10, 37) einen Wurzelbereich (22) benachbart zum Flansch (9, 36) aufweist, ein Mittelbereich (23) vorgesehen ist, der angrenzend an den Wurzelbereich (22) und entfernt von dem Flansch (9, 36) angeordnet ist und einen Endbereich aufweist, der am Ende des Mittelbereichs (23) entfernt vom Wurzelbereich (22) angeordnet ist, wobei die Dicke des Wurzelbereichs (22) geringer als die Dicke des Mittelbereichs (23) ausgebildet ist und der Stift (2, 31) relativ beweglich in der Hülse (3, 32) zwischen einer ersten, den Durchmesser nicht aufweitenden Verbindungsposition angeordnet ist, in der ein Eingreifmittel (18, 40) in die Hülse (3, 32) mit zusammenwirkenden zweiten Eingreifmitteln (13, 42) an dem Stift (2, 31) und in eine zweite Durchmesser aufweitende Verbindungsposition eingreift, **dadurch gekennzeichnet, daß** der Stift (2, 31) in einer zweiten Durchmesser aufweitenden Verbindungsposition anordbar ist, in der das Eingreifmittel (19, 40) auf der Hülse (3, 32) mit zusammenwirkenden ersten Eingreifmitteln (12, 43) am Stift (2, 31) eingreift, um den Durchmesser des Hülsenschafts (10, 37) an seinem von dem Flansch entfernten Ende (9,36) aufzuweiten.

2. Clip (1) gemäß Anspruch 1, **dadurch gekennzeichnet, daß** die Eingreifmittel (18) radial nach Innen gerichtete erste Eingreifklinken (18) umfassen, die an dem Wurzelbereich (22) ausgebildet sind und der Endbereich mit radial nach Innen weisenden Rippen (24) ausgebildet ist und in den Eingreifmitteln (19) endet, die mit dem zusammenwirkenden ersten Eingreifsmittel (12, 43) eingreifen und zweite Eingreifklinken (19) aufweisen und das erste und zweite Eingreifmittel (12, 13) erste und zweite axial beabstandete radiale Eingreifnuten (12, 13) aufweist, die an dem Stiftschaft (8) vorgesehen sind.

3. Clip (1) gemäß Anspruch 1 oder 2, **dadurch gekennzeichnet, daß** ein Abstand zwischen dem Stiftflansch (7) und dem Hülsenflansch (9) um die Peripherie des Stiftflansches (7) in der durchmesseraufweitenden Verbindungsposition vorgesehen ist.

4. Clip (1) gemäß Anspruch 2 oder 3, **dadurch gekennzeichnet, daß** der Stift (2) relativ zu der Hülse (3) in einer weiteren Position anordbar ist, um ein Entriegeln des Stifts (2) von der Hülse (3) zu verhindern, in der die ersten Eingreifsklinken (18) in die erste Eingreifnut (12) eingreifen, um ein Entriegeln des Stifts (2) von der Hülse (3) zu verhindern.

5. Clip nach Anspruch 1, **dadurch gekennzeichnet, daß** das Eingreifmittel an der Hülse ein über den Durchmesser reichender Eingriffsriegel (40) ist, der am Ende des hohlen Schafts (37) der Hülse (32) gebildet ist; der Stiftschaft Beine (35) umfaßt, die voneinander in Richtung des Endes des Stiftschaftes entfernt vom Flansch (34) beabstandet sind; der freie Endbereich eines jeden Beines (34) ist mit einem zurückreichenden Bereich (41) ausgebildet, um den Eingriffsriegel (40) aufzunehmen, um das zweite Eingreifmittel als erste Eingriffsklinke (42) auszubilden, welches in den Eingriffsriegel (40) eingreift, so daß der Clip (30) in eine Durchmesser nicht aufweitenden Verbindungsposition positionierbar ist, in der der Stiftschaft in den Hülsenschaft (37) eingeführt wird, jedoch nicht den Hülsenschaft (37) diametral aufweitet; der Mittelbereich eines jeden Beines (35) an seiner Innenseite das erste Eingreifmittel aufweist, das die zweite Eingriffsklinke (43) bildet, die mit dem Eingriffsriegel (40) eingreift, um die Beine (35) voncinander boabstandet zu halten, so daß der Clip (30) in einer Durchmesser aufweitenden Verbindungsposition positionierbar ist, in dem der Stiftschaft weiter in den Hülsenschaft (37) eingebracht wird, um den Endbereich des Hülsenschafts aufzuweiten; und die Innenseite eines jeden Beines (35) eine dritte Eingriffsklinke (46) aufweist, die mit einem Rücksprungbereich (45) versehen ist, um den Eingriffsriegel (40) zu bilden, so daß der Clip (30) in einer dritten Position positionierbar ist, in der der Stift (30) noch weiter in den Hülsenschaft (37) eingebracht wird, um den Hülsenschaft (37) in die Durchmesser nicht aufweitende Verbindungsposition zurückzuführen.

## Revendications

1. Attache (1, 30) comprenant une cheville (2, 31) comportant une collerette (7, 34) et une tige (8, 35) et une douille (3, 32) comportant une collerette (9, 36) et une tige (10, 37), la douille (3, 32) étant creuse pour recevoir intérieurement la tige de cheville (8, 35), la tige de douille (10, 37) comportant une partie de pied (22) adjacente à la collerette (9, 36), une partie intermédiaire (23) adjacente à la partie de pied (22) et située à l'opposé de la collerette (9, 36) et une partie d'extrémité située à l'extrémité de la partie intermédiaire (23) opposée à la partie de pied (22), l'épaisseur de la partie de pied (22) étant inférieure à l'épaisseur de la partie intermédiaire (23) et la cheville (2, 31) étant mobile vis-à-vis de la douille (3, 32) entre une première position accouplée à diamètre non élargi, dans laquelle des moyens de venue en prise (18, 40) situés sur la douille (3, 32) viennent en prise avec des moyens de venue en prise secondaires (13, 42) coopérants situés sur la cheville (2, 31), et une seconde position accouplée d'élargissement de diamètre, **caractérisée en ce que** la cheville (2, 31) peut être placée dans ladite seconde position accouplée d'élargissement de diamètre dans laquelle des moyens de venue en prise (19, 40) situés sur la douille (3, 32) viennent en prise avec des moyens de venue en prise principaux (12, 43) coopérants situés sur la cheville (2, 31) de façon à élargir le diamètre de la tige de douille (10, 37) à son extrémité opposée à la collerette (9, 36).

2. Attache (1) suivant la revendication 1, **caractérisée en ce que** les moyens de venue en prise (18) comprennent des premiers doigts d'encliquetage de venue en prise (18) faisant saillie radialement vers l'intérieur et formés sur la partie de pied (22), et des nervures (24) faisant saillie radialement vers l'intérieur sont formées sur la partie d'extrémité, laquelle se termine par les moyens de venue en prise (19) qui viennent en prise avec les moyens de venue en prise principaux (12, 43) coopérants et comprennent des seconds doigts d'encliquetage de venue en prise (19) et les moyens de venue en prise principaux et secondaires (12, 13) comprennent des premières et secondes gorges de venue en prise radiale (12, 13) espacées axialement et prévues sur la tige de cheville (8).

3. Attache (1) suivant la revendication 1 ou la revendication 2, **caractérisée en ce qu'**il existe un espace entre la collerette de cheville (7) et la collerette de douille (9) autour de la partie périphérique de la collerette de cheville (7) dans la position accouplée d'élargissement de diamètre.

4. Attache (1) suivant la revendication 2 ou la revendication 3, **caractérisée en ce que** la cheville (2) peut être positionnée vis-à-vis de la douille (3) dans une autre position empêchant une venue hors de prise de la cheville (2) vis-à-vis de la douille (3), dans laquelle les premiers doigts d'encliquetage de venue en prise (18) viennent en prise dans la première gorge de venue en prise (12) de façon à empêcher une venue hors de prise de la cheville (2) vis-à-vis de la douille (3).

5. Attache suivant la revendication 1, **caractérisée en ce que** les moyens de venue en prise situés sur la douille consistent en une barrette de venue en prise (40) disposée en travers d'une manière diamétrale formée sur l'extrémité de la tige creuse (37) de la douille (32) ; la tige de cheville comprend deux branches (35) espacées l'une de l'autre et dirigées vers l'extrémité de la tige de cheville opposée à la collerette (34) ; une partie en retrait (41) est formée sur la partie d'extrémité libre de chaque branche (35) pour recevoir la barrette de venue en prise (40) afin de former les moyens de venue en prise secondaires sous forme d'un premier doigt d'encliquetage de venue en prise (42) destiné à venir en prise avec la barrette de venue en prise (40), de sorte que l'attache (30) peut être positionnée dans une position accouplée à diamètre non élargi dans laquelle la tige de cheville est introduite dans la tige de douille (37), mais n'élargit pas la tige de douille (37) diamétralement ; la partie intermédiaire de chaque branche (35) comporte, sur sa face intérieure, les moyens de venue en prise principaux formant un deuxième doigt d'encliquetage de venue en prise (43) qui vient en prise avec la barrette de venue en prise (40) de façon à maintenir les branches (35) espacées l'une de l'autre, de sorte que l'attache (30) peut être positionnée dans une position accouplée d'élargissement de diamètre dans laquelle la tige de cheville est introduite plus loin dans la tige de douille (37) de façon à élargir diamétralement la partie d'extrémité de la tige de douille ; et la face intérieure de chaque branche (35) comporte un troisième doigt d'encliquetage de venue en prise (46) dans lequel une partie en retrait (45) est ménagée pour recevoir la barrette de venue en prise (40), de sorte que l'attache (30) peut être positionnée dans une troisième position dans laquelle la cheville (30) est introduite encore plus loin dans la tige de douille (37) de façon à ramener la tige de douille (37) dans la position accouplée à diamètre non élargi.
